(19) Europäisches Patentamt
European Patent Office
Office européen des brevets

(11) Veröffentlichungsnummer: **0 213 281 B1**

# (12) EUROPÄISCHE PATENTSCHRIFT

(45) Veröffentlichungstag der Patentschrift: **11.12.91**

(51) Int. Cl.[5]: **C09B 67/00**, C09B 3/60

(21) Anmeldenummer: **86107317.9**

(22) Anmeldetag: **30.05.86**

## (54) Verfahren zur Herstellung von Pigmenten der Anthanthronreihe.

(30) Priorität: **11.06.85 DE 3520806**

(43) Veröffentlichungstag der Anmeldung:
**11.03.87 Patentblatt 87/11**

(45) Bekanntmachung des Hinweises auf die Patenterteilung:
**11.12.91 Patentblatt 91/50**

(84) Benannte Vertragsstaaten:
**CH DE FR GB IT LI**

(56) Entgegenhaltungen:
**DE-C- 886 734**
**FR-A- 2 286 177**
**GB-A- 339 516**

(73) Patentinhaber: **HOECHST AKTIENGESELLSCHAFT**
**Postfach 80 03 20**
**W-6230 Frankfurt am Main 80(DE)**

(72) Erfinder: **Spietschka, Ernst, Dr.**
**Am Rödchen 8**
**W-6270 Idstein(DE)**
Erfinder: **Urban, Manfred**
**Steigerwaldstrasse 2a**
**W-6200 Wiesbaden(DE)**

**EP 0 213 281 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von Pigmenten der Anthanthronreihe mit wertvollen Eigenschaften auf wirtschaftlichem Weg, ausgehend von den Rohpigmenten.

Halogenierte Anthanthrone haben als Küpenfarbstoffe in der Textilfärberei große technische Bedeutung erlangt. Als technisch wichtiges Pigment mit ausgezeichneten Echtheiten hat sich das 4,10-Dibromanthanthron bewährt.

Die Herstellung des entsprechenden grobkristallinen Rohpigments ist in FIAT 1313 Vol II/1 beschreiben. Zur Überführung in die Pigmentform sind verschiedene Verfahren bekannt geworden. In der DE-PS 2540739 wird die Feinverteilung von Pigmenten durch Umfällung der Rohpigmente, beispielsweise des Dibromanthanthrons, mit konzentrierter Schwefelsäure beschrieben, welcher sich eine Behandlung mit Cetyltrimethylammoniumbromid anschließt. Die so erhaltenen Pigmente besitzen nur mäßige Farbstärke und unbefriedigendes rheologisches Verhalten. Unter unbefriedigendem rheologischen Verhalten ist hierei niedriger Glanz, starke Flockung, hohe Viskosität und geringe Dispergierstabilität zu verstehen. Die großen Mengen anfallender verdünnter Säuren führen außerdem zu hoher Abwasserbelastung. In der GB-PS 719072 wird die Feinverteilung des Dibromanthanthrons durch Suspension in einer Mischung aus Eisen(II)-chlorid/Äthylenchlorid und anschließende Hydrolyse beschrieben. Die so erhaltenen Pigmente sind relativ deckend und farbschwach und genügen nicht den Anforderungen des Marktes hinsichtlich ihres rheologischen Verhaltens. Ferner bedingt das Arbeiten mit Äthylenchlorid einen hohen technischen Aufwand. In der EP-PS 0075182 wird ein Verfahren beschrieben, bei dem die Feinverteilung des Dibromanthanthrons durch Behandlung mit Phosphorsäure und anschließende Hydrolyse erfolgt, der sich bekannte Finishvarianten anschließen könnten. Die nach diesem Verfahren hergestellten Pigmente besitzen nur geringe Farbstärke und nicht befriedigendes rheologisches Verhalten. Außerdem fallen große Mengen verdünnter Säuren an.

In der US-PS 2032458 wird die Oxydation der gelösten Leukoverbindungen von Küpenfarbstoffen mit nitrobenzolsulfonsauren Salzen beschrieben; das 4,10-Dibromanthanthron wird jedoch nicht erwähnt. Da nach diesem Verfahren anspruchsgemäß die Oxydation mit der gelösten Leukoverbindung durchgeführt werden muß - dies würde im Falle des 4,10-Dibromanthanthrons eine wirtschaftlich unvertretbar hohe Verdünnung bedeuten - ist auch dieses Verfahren nicht wirtschaftlich. Bei allen genannten bekannten Verfahren fallen die Dibromanthanthron-Pigmente zwar feinverteilt an, bilden jedoch nadelförmige Kriställchen oder gehen bei der Einwirkung von organischen Lösungsmitteln in Nadelform über, sei es beim Finish oder bei der Dispergierung im Lack. Das Vorliegen in Nadelform bzw. die Neigung in Nadelform zu kristallisieren ist als Ursache für das schlechte rheologische Verhalten anzusehen. Es bestand deshalb ein Bedürfnis das 4,10-Dibromanthanthron und die anderen Anthanthrone der nachstehend genannten allgemeinen Formel in eine derartige feinverteilte Form zu bringen, die selbst nicht nadelförmig ist und auch in Kontakt mit organischen Lösungsmitteln keine Nadeln bildet.

Es wurde nun gefunden, daß man Anthanthrone der allgemeinen Formel

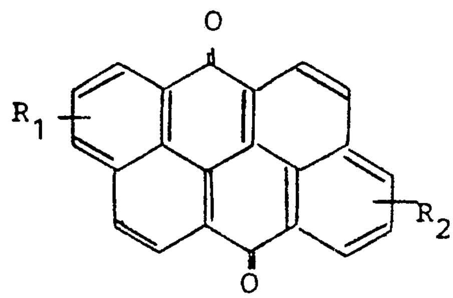

in welcher $R_1$ und $R_2$ Chlor-, Brom- oder Iodatome oder Alkoxy-$C_1$-$C_4$-gruppen bedeuten, mit wertvollen Eigenschaften auf wirtschaftlichem Weg herstellen kann, indem man die Anthanthrone der genannten allgemeinen Formel in Form des Rohpigments zunächst in wäßrig-alkalischem Medium bei einem pH-Wert > 10 in die Leukoform überführt, diese durch Zugabe anorganischer oder organischer Säuren abscheidet, die wäßrige Suspension der Leukoform zu den Anthanthronen reoxydiert und die so erhaltenen feinteiligen Präpigmente der genannten Formel einem Lösungsmittelfinish unterwirft.

Im Zuge einer Ausführungsform dieses Verfahrens arbeitet man wie folgt: Man trägt bei 0 - 80° C, vorzugsweise 15 - 30° C, das Rohpigment in die 8 bis 50-fache, vorzugsweise 10 bis 30-fache Menge Wasser ein, gibt die zur Verküpung notwendige Menge konzentrierter Natronlauge und Natriumdithionit zu bis am Ende ein pH 11,5 erreicht ist. Danach rührt man 1 bis 6 Stunden, vorzugsweise 1 bis 3 Stunden, nach. Nach vollständiger Verküpung wird durch Zugabe von organischen oder anorganischen Säuren bei pH 7 - 11,5, die unlösliche reduzierte Form des entsprechenden Anthanthrons abgeschieden, die danach vorzugsweise bei pH 7 - 11,5 durch Oxydation mit Oxydationsmitteln, wie beispielsweise Wasserstoffperoxyd, Luft oder alkalischer Hypochloritlösung in das feinteilige Präpigment überführt wird. Nach der Filtration wird das feinteilige Präpigment einem Lösungsmittelfinish

zugeführt. Im Anschluß an die Lösungsmittelbehandlung (Finish) wird das Pigment auf übliche Weise isoliert.

Eine bevorzugte Arbeitsweise besteht darin, daß man nach der Reoxydation nicht zwischenisoliert, sondern das Lösungsmittel dem angefallenen reoxydierten Anthanthron zugibt und anschließend die Lösungsmittelbehandlung durchführt. Zur Verbesserung der coloristischen Eigenschaften können vor der Verküpung, vor der Oxydation und vor der Lösungsmittelbehandlung bzw. nach der Lösungsmittelbehandlung oberflächenaktive Verbindungen zugesetzt werden.

Zur Herstellung des wäßrig-alkalischen Mediums, in welchem die Anthanthrone zunächst in die Leukoform überführt werden, verwendet man wäßrige Lösungen von Alkalimetallhydroxiden, vorzugsweise Natron- und Kalilauge. Als Reduktionsmittel selbst wird zweckmäßigerweise Natriumdithionit eingesetzt.

Als Säuren zum Abscheiden der Leukoform kommen sowohl anorganische als auch organische Säuren, wie beispielsweise Phosphorsäure, Schwefelsäure, Salzsäure, Ameisensäure, Essigsäure, Propionsäure und Trichloressigsäure in Frage.

Als Lösungsmittel für den Finish kommen beispielsweise folgende in Frage:
Alkanole($C_1$-$C_4$), wie Methanol, Äthanol, Propanol, n- oder i-Butanol, Dialkyl$\overline{C_1\text{-}C_3}$-ketone, wie z.B. Dimethylketon, Diäthylketon, Methyl-äthylketon, Glykolether, wie z.B. der Monomethyl- oder Monäthylether des Glykols, aromatische Kohlenwasserstoffe, wie z.B. Toluol, Xylole oder Äthylbenzol, aromatische Chlorkohlenwasserstoffe, wie z.B. Chlorbenzol, o-Dichlorbenzol, 1,2,4-Trichlorbenzol oder Brombenzol, aromatische Nitroverbindungen, wie z.B. Nitrobenzol oder Nitrophenol, aliphatische Carbonsäureamide, wie z.B. Formamid oder Dimethylformamid, cyclische Carbonsäureamide, wie z.B. N-Methylpyrrolidon, Carbonsäure$\overline{C_1\text{-}C_3}$-alkyl$\overline{C_1\text{-}C_4}$ester, wie z.B. Ameisensäurebutylester, Essigsäureäthylester oder Propionsäurepropylester, oder Benzoesäure-alkyl$\overline{C_1\text{-}C_4}$ester, wie beispielsweise Benzoesäureäthylester.

Durch die Wahl des Lösungsmittels, des pH-Wertes, der Temperatur, der Zeit und der obeflächenaktiven Verbindung beim Finish lassen sich Transparenz und Deckfähigkeit der Pigmente in weiten Grenzen steuern. Das erfindungsgemäße Verfahren ist von besonderer Bedeutung für das 4,10-Dibromanthanthron, ist aber auch auf die anderen Verbindungen der Anthanthronreihe der genannten allgemeinen Formel anwendbar. Die nach dem erfindungsgemäßen Verfahren erhaltenen Pigmente zeichnen sich durch hohe Farbstärke, reinen Farbton, hohen Glanz der Lackierungen, niedrige Viskosität der Lacke, einwandfreies Flockungs- und Dispergierverhalten sowie sehr gute Wetterechtheit, insbesondere sehr gute Glanzhaltung bei Bewitterung aus.

Beispiel 1

Man legt 1000 ml Wasser vor und gibt dazu 60 g Natriumdithionit und 1 g eines handelsüblichen Dispergiermittels auf Basis Alkylphenolpolyglykoläthersulfat. In die hierbei erhaltene Lösung trägt man dann 40 g 4,10-Dibromanthanthron in Form des Rohpigments bei 20 - 25° C ein und tropft anschließend 80 g Natronlauge 33 %ig zu, wobei sich ein pH-Wert von 12,7 einstellt. Anschließend rührt man 1 Stunde bei 20 - 25° C nach und läßt dann in 15 Minuten 24,3 g Eisessig zutropfen, bis sich ein pH-Wert von 10 - 11 einstellt. Danach rührt man 1 Stunde bei 20 - 25° C nach und läßt dann bei pH 10 - 11 gleichzeitig 120 g Perhydrol 35 %ig und 32 g Natronlauge 33 %ig zutropfen. Nach beendetem Zusatz rührt man 15 Stunden bei 20 - 25° C nach, saugt ab und wäscht neutral.

Der so erhaltene Preßkuchen wird mit einer Lösung aus 183 ml Wasser und 6 g Natronlauge 33 %ig angerührt. Nach Zugabe von 40 g Nitrobenzol wird 3 Stunden zum Sieden erhitzt, danach das Nitrobenzol mit Wasserdampf abdestilliert und das Pigment abgesaugt, neutral gewaschen und bei 80° C getrocknet. Man erhält 39,2 g Pigment (4,10-Dibromanthanthron), das hervorragend zum Färben von Lacken und plastischen Massen geeignet ist.

Beispiel 2

Man legt 1000 ml Wasser vor und gibt dazu 60 g Natriumdithionit. In die hierbei erhaltene Lösung trägt man 40 g 4,10-Dibromanthanthron in Form des Rohpigments ein und tropft anschließend bei 20 - 25° C 80 g Natronlauge 33 %ig zu, wobei sich ein pH-Wert von 12,8 einstellt. Anschließend rührt man 1 Stunde bei 20 - 25° C nach und läßt dann in 15 Minuten 20,8 g Phosphorsäure 89 %ig zutropfen, bis sich ein Wert von pH 10 - 11 einstellt. Dann rührt man 1 Stunde bei 20 - 25° C nach und läßt anschließend bei pH 10 - 11 gleichzeitig 90 g Perhydrol 35 %ig und 45,4 g Natronlauge 33 %ig zutropfen. Nach beendetem Zusatz rührt man 15 Stunden bei 20 - 25° C nach, saugt dann ab und wäscht den Niederschlag neutral.

Den feuchten Preßkuchen rührt man mit einer Lösung aus 215 ml Wasser und 8,6 g Natronlauge 33 %ig an, gibt 40 g Nitrobenzol zu und erhitzt 3 Stunden zum Sieden. Anschließend wird das Nitrobenzol mit Wasserdampf abdestilliert und das Pigment neutral gewaschen und bei 80° C getrockent. Man erhält 38,9 g Pigment (4,10-Dibromanthanthron), das hervorragend zum Färben von Lacken und plastischen Massen geeignet ist.

Beispiel 3

Man legt 1000 ml Wasser vor und gibt dazu 60 g Natriumdithionit und 1 g eines handelsüblichen Dispergiermittels auf Basis Alkylphenolpolyglykolāthersulfat. In die so erhaltene Lösung trägt man dann 40 g 4,10-Dibromanthanthron in Form des Rohpigments ein und tropft anschließend bei 20 - 25° C 80 g Natronlauge 33 %ig zu, wobei sich ein pH-Wert von 12,4 einstellt. Anschließend rührt man 1 Stunde bei 20 - 25° C nach und läßt dann in 15 Minuten 21,6 g Phosphorsäure 89 %ig zutropfen, bis sich ein pH-Wert von 10 - 11 einstellt. Dann rührt man 1 Stunde bei 20 - 25° C nach, leitet anschließend 15 Stunden Luft ein und läßt bei pH 10 - 11 gleichzeitig 42,5 g Natronlauge 33 %ig zutropfen. Anschließend wird der Niederschlag abgesaugt und neutral gewaschen.

Der erhaltene feuchte Preßkuchen wird dann mit einer Lösung aus 195 ml Wasser und 5,6 g Natronlauge 33 %ig angerührt. Nach Zugabe von 40 g Nitrobenzol wird 3 Stunden zum Sieden erhitzt und danach das Nitrobenzol mit Wasserdampf abdestilliert und das Pigment abgesaugt, neutral gewaschen und bei 80° C getrocknet. Man erhält 39,3 g Pigment (4,10,Dibromanthanthron), das sich hervorragend zum Färben von Lacken und plastischen Massen eignet.

Beispiel 4

Man legt 1000 ml Wasser vor und gibt dazu 60 g Natriumdithionit und 1 g eines handelsüblichen Dispergiermittels auf Basis Alkylphenolpolyglykoläthersulfat. In die hierbei erhaltene Lösung trägt man 40 g 4,10-Dibromanthanthron in Form des Rohpigments ein, tropft anschließend bei 20 - 25° C 80 g Natronlauge 33 %ig zu, bis sich ein pH-Wert von 12,9 einstellt. Danach rührt man 1 Stunde bei 20 - 25° C nach und läßt dann in 15 Minuten 23,3 g Eisessig zutropfen bis sich ein pH-Wert von 10 - 11 einstellt. Danach rührt man 1 Stunde bei 20 - 25° C nach und läßt dann bei pH 10 - 11 gleichzeitig 120 g Perhydrol 35 %ig und 32 g Natronlauge 33 %ig zutropfen. Nach beendetem Zusatz rührt man 15 Stunden bei 20 - 25° C nach, saugt den Niederschlag ab und wäscht neutral.

Der Preßkuchen wird mit 200 g Isobutanol 85 % gerührt und 3 Stunden zum Sieden erhitzt. Nach Zugabe von 200 ml Wasser wird das Isobutanol bis 100° C am Übergang abdestilliert und der Niederschlag abgesaugt, mit Wasser gewaschen und bei 80° C getrocknet. Man erhält 39,6 g Pigment (4,10-Dibromanthanthron), das transparenter und farbstärker ist als das nach Beispiel 1 erhaltene Pigment und das hervorragend zum Färben von Lakken und plastischen Massen geeignet ist.

Beispiel 5

Man legt 500 ml Wasser vor und gibt dazu 30 g Natriumdithionit und 1 g eines handelsüblichen Dispergiermittels auf Basis Alkylphenolpolyglykoläthersulfat. In die so erhaltene Lösung trägt man 20 g 4,10-Dichloranthanthron in Form des Rohpigments ein und tropft bei 20 - 25° C 40 g Natronlauge 33 %ig zu bis sich ein pH-Wert von 12,3, einstellt. Anschließend rührt man 2 Stunden bei 20 - 25° C nach und läßt dann in 15 Minuten 18,6 g Eisessig zutropfen, bis sich ein pH-Wert von 10 - 11 einstellt. Danach rührt man 1 Stunde bei 20 - 25° C nach und läßt bei pH 10 - 11 gleichzeitig 60 g Perhydrol 35 %ig und 16 g Natronlauge 33 %ig zutropfen. Nach beendetem Zusatz rührt man 15 Stunden bei 20 - 25° C nach, saugt ab und wäscht neutral.

Der Preßkuchen wird mit einer Lösung aus 137,6 ml Wasser und 6 g Natronlauge 33 %ig angerührt, mit 40 g Nitrobenzol versetzt und 3 Stunden zum Sieden erhitzt. Dann wird das Nitrobenzol mit Wasserdampf abdestilliert, abgesaugt, neutral gewaschen und bei 80° C getrocknet. Man erhält 19,8 g Pigment (4,10-Dichloranthanthron), das hervorragend zum Färben von Lacken und plastischen Massen geeignet ist.

Beispiel 6

Man legt 500 ml Wasser vor und gibt dazu 30 g Natriumdithionit und 1 g eines handelsüblichen Dispergiermittels auf Basis Alkylphenolpolyglykoläthersulfat. In die hierbei erhaltene Lösung trägt man dann 40 g 4,10-Dibromanthanthron in Form des Rohpigments ein und tropft anschließend bei 20 - 25° C 80 g Natronlauge 33 %ig zu und setzt dann noch 20 g Natriumdithionit zu, bis sich ein pH-Wert von 12,3 einstellt. Anschließend rührt man 3 Stunden bei 20 - 25° C nach, tropft 19,4 g Phosphorsäure 89 %ig zu, bis sich ein pH-Wert von 10 - 11 einstellt und rührt bei 20 - 25° C nach.

Danach tropft man 31,5 g Perhydrol 35 %ig zu, rührt 15 Stunden bei 20 - 25° C nach und tropft 5 g Phosphorsäure 89 %ig zu bis sich ein pH-Wert von 9 einstellt. Anschließend gibt man 40 g Nitrobenzol zu, erhitzt 3 Stunden zum Sieden, destilliert dann das Nitrobenzol mit Wasserdampf ab, saugt den Niederschlag ab, wäscht neutral, trocknet bei 80° C. Man erhält 39,4 g Pigment (4,10-Dibromanthanthron), das hervorragend zum Färben von Lakken und plastischen Massen geeignet ist.

Beispiel 7

Man legt 560 ml Wasser vor und gibt dazu 33,75 g Natriumdithionit und 0,6 g eines handelsüblichen Dispergiermittels auf Basis Alkylphenolpolyglykoläthersulfat. In die so erhaltene Lösung trägt man 22,5 g 4,10-Dijodanthanthron in Form des Rohpigments ein und tropft bei 20 - 25° C 45 g Natronlauge 33 %ig zu, wobei sich ein pH-Wert von 12,7 einstellt. Dann rührt man 3 Stunden bei 20 - 25° C nach und tropft anschließend in 15 Minuten 14,5 g Eisessig zu, bis sich ein pH-Wert von 10 - 11 einstellt. Danach rührt man 1 Stunde bei 20 - 25° C nach und tropft bei pH 10 - 11 gleichzeitig 50,6 g Perhydrol 35 %ig und 27,2 g Natronlauge 33 %ig zu. Nach erfolgter Zugabe rührt man 15 Stunden bei 20 - 25° C nach, saugt den Niederschlag ab und wäscht neutral.

Dann rührt man den Preßkuchen mit einer Lösung aus 105,2 ml Wasser und 1,6 g wasserfreiem Natriumcarbonat an und gibt 22,5 g Nitrobenzol zu und erhitzt 3 Stunden zum Sieden. Schließlich wird das Nitrobenzol mit Wasserdampf abdestilliert, abgesaugt, neutral gewaschen und bei 80° C getrocknet. Man erhält 21,6 g Pigment (4,10-Dijodanthanthron), das hervorragend zum Färben von Lacken und plastischen Massen geeignet ist.

Beispiel 8

Man legt 345 ml Wasser vor und gibt dazu 20,7 g Natriumdithionit und 0,4 g eines handelsüblichen Dispergiermittels auf Basis Alkylphenolpolyglykoläthersulfat. In die so erhaltene Lösung trägt man 13,8 g 4,10-Diäthoxyanthanthron in Form des Rohpigments ein und tropft bei 20 - 25° C 27,6 g Natronlauge 33 %ig zu, wobei sich ein pH-Wert von 12,7 einstellt. Danach rührt man 3 Stunden bei 20 - 25° C nach und tropft anschließend in 15 Minuten 8,0 g Eisessig zu, bis sich ein pH-Wert von 10 - 11 eingestellt. Danach rührt man 1 Stunde bei 20 - 25° C nach, tropft bei pH 10 - 11 gleichzeitig 31,0 g Perhydrol 35 %ig und 11,9 g Natronlauge 33 %ig zu und rührt 15 Stunden bei 20 - 25° C nach. Danach saugt man den Niederschlag ab und wäscht neutral.

Der Preßkuchen wird mit einer Lösung aus 105,5 ml Wasser und 1,4 g wasserfreiem Natriumcarbonat angerührt, mit 13,8 g Nitrobenzol versetzt und 3 Stunden zum Sieden erhitzt. Schließlich wird das Nitrobenzol mit Wasserdampf abdestilliert, abgesaugt, neutral gewaschen und bei 80° C getrocknet. Man erhält 13,6 g Pigment (4,10-Diäthoxyanthanthron), das hervorragend zum Färben von Lakken und plastischen Massen geeignet ist.

**Patentansprüche**

1. Verfahren zur Herstellung von Pigmenten der Anthanthronreihe der allgemeinen Formel

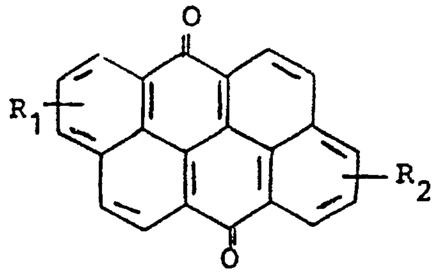

in welcher $R_1$ und $R_2$ Chlor-, Brom- oder Iodatome oder Alkoxy$C_1$-$C_4$gruppen bedeuten, dadurch gekennzeichnet, daß man die Anthanthrone der genannten allgemeinen Formel in Form des Rohpigments zunächst in wäßrig-alkalischem Medium bei einem pH-Wert > 10 in die Leukoform überführt, diese durch Zugabe anorganischer oder organischer Säuren abscheidet, die wäßrige Suspension der Leukoform zu den Anthanthronen reoxydiert und die so erhaltenen feinteiligen Präpigmente der genannten Formel einem Lösungsmittelfinish unterwirft.

2. Verfahren nach Anspruch 1, dadurch gekennzeichnet, daß man die Reduktion in wäßrig-alkalischem Medium mittels Natriumdithionit, die Abscheidung der Leukoform durch Zugabe von Salzsäure, Schwefelsäure, Phosphorsäure, Ameisensäure, Essigsäure, Propionsäure oder Trichloressigsäure bei pH 7 bis 11,5 und die Reoxidation zum feinteiligen Präpigment mittels Wasserstoffperoxyd, Wasserstoffperoxyd-Addukten, Luft, alkalischer Hypochloritlösung oder m-nitrobenzolsulfonsaurem Natrim durchführt.

3. Verfahren nach Anspruch 1, dadurch gekennzeichnet, daß man zwischen Reoxydation zum feinteiligen Präpigment und dem sich daran anschließenden Lösungsmittelfinish nicht zwischenisoliert, sondern das Lösungsmittel zum angefallenen reoxydierten Anthanthron zugibt und die Lösungsmittelbehandlung (Finish) vornimmt.

4. Verfahren nach Anspruch 1, dadurch gekennzeichnet, daß man als Lösungsmittel für den Finish Alkanole($C_1$-$C_4$) Dialkyl$\overline{C_1-C_3}$ketone, Glykoläther, aromatische Kohlenwasserstoffe, aromatische Chlorkohlenwasserstoffe, aromatische Nitroverbindungen, aliphatische oder cyclische Carbonsäureamide, Carbonsäure$\overline{C_1-C_3}$-alkyl$\overline{C_1-C_4}$ester oder Benzoesäure-alkyl$\overline{C_1-C_4}$ester verwendet.

**Claims**

1. A process for the preparation of pigments of the anthanthrone series of the general formula

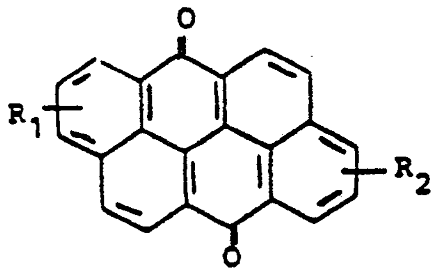

in which $R_1$ and $R_2$ denote chlorine, bromine or iodine atoms or $C_1$-$C_4$-alkoxy groups, which comprises first converting the anthanthrones of the general formula mentioned, in the form of the crude pigment, in an aqueous alkaline medium and at a pH >10, into the leuco-form, precipitating the latter by adding inorganic or organic acids, reoxidizing the aqueous suspension of the leuco-form to give the anthanthrones and subjecting the resulting finely divided pre-pigments of the formula mentioned to a solvent finish.

2. The process as claimed in claim 1, wherein the reduction is carried out in an aqueous alkaline medium by means of sodium dithionite, the precipitation of the leuco-form is carried out by adding hydrochloric acid, sulfuric acid, phosphoric acid, formic acid, acetic acid, propionic acid or trichloroacetic acid at pH 7 to 11.5, and the reoxidation to give the finely divided pre-pigment is carried out by means of hydrogen peroxide, hydrogen peroxide adducts, air, alkaline hypochlorite solution or sodium m-nitrobenzenesulfonate.

3. The process as claimed in claim 1, wherein intermediate isolation is not carried out between the reoxidation to give the finely divided pre-pigment and the subsequent solvent finish, but the solvent is added to the reoxidized anthanthrone obtained, and the solvent treatment (finish) is carried out.

4. The process as claimed in claim 1, wherein the solvents used for the finish are ($C_1$-$C_4$)-alkanols, $C_1$-$C_3$-dialkyl ketones, glycol ethers, aromatic hydrocarbons, aromatic chlorinated hydrocarbons, aromatic nitro compounds, aliphatic or cyclic carboxamides, $C_1$-$C_4$-alkyl $C_1$-$C_3$-carboxylates or $C_1$-$C_4$-alkyl benzoates.

**Revendications**

1. Procédé pour préparer des pigments de la série de l'anthraquinone, répondant à la formule générale :

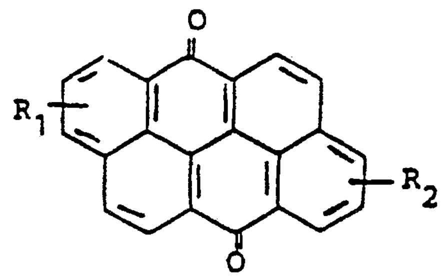

(dans laquelle $R_1$ et $R_2$ représentent chacun des atomes de chlore, de brome ou d'iode ou des groupes alcoxy en $C_1$ à $C_4$), procédé caractérisé en ce qu'on transforme les anthraquinones répondant à la formule générale citée, sous forme du pigment brut, tout d'abord dans un milieu alcalin aqueux à un pH supérieur à 10 en la forme du leuco-dérivé correspondant, on sépare ce leuco-dérivé, par addition d'acides minéraux ou organiques, on réoxyde la suspension aqueuse de la forme leuco-dérivée pour obtenir les anthraquinones et l'on soumet les prépigments en fines particules ainsi obtenus , qui répondent à la formule précitée, à un traitement de finition par du solvant.

2. Procédé selon la revendication 1, caractérisé en ce qu'on conduit la réduction dans un milieu alcalin aqueux, à l'aide de dithionite de sodium, on effectue la séparation de la forme de leuco-dérivé par addition d'acide chlorhydrique, d'acide sulfurique, d'acide phosphorique, d'acide formique, d'acide acétique, d'acide propionique ou d'acide trichloracétique, à pH 7 à 11,5 et l'on effectue la réoxydation pour obtenir un pré-pigment en fines particules en utilisant du peroxyde d'hydrogène, des produits d'addition du peroxyde d'hydrogène, de l'air, une solution alcaline d'hypochlorite ou du m-nitrobenzène-sulfonate de sodium.

3. Procédé selon la revendication 1, caractérisé en ce que, entre la réoxydation donnant du pré-pigment en fines particules et le traitement de finition à l'aide d'un solvant qui suit, on n'effectue pas d'isolement intermédiaire mais l'on ajoute le solvant à l'anthraquinone réoxydée précipitée et l'on effectue le traitement (de finition) par du solvant.

4. Procédé selon la revendication 1, caractérisé en ce qu'on utilise, comme solvant pour la

finition des alcools (en $C_1$ à $C_4$), des dialkylcétones dont chaque groupe alkyle est en $C_1$ à $C_3$, des oxydes de glycols, des hydrocarbures aromatiques, des hydrocarbures aromatiques chlorés, des composés nitrés aromatiques, des amides d'acides carboxyliques aliphatiques ou cycliques, des esters alkyliques (en $C_1$ à $C_4$) d'acides carboxyliques (en $C_1$ à $C_3$) ou un benzoate d'alkyle en $C_1$ à $C_4$.